(19) Europäisches Patentamt
European Patent Office
Office européen des brevets

(11) EP 4 442 741 A1

(12) EUROPEAN PATENT APPLICATION

(43) Date of publication:
**09.10.2024 Bulletin 2024/41**

(21) Application number: **23166322.0**

(22) Date of filing: **03.04.2023**

(51) International Patent Classification (IPC):
***C08J 5/22*** *(2006.01)* ***H01M 8/1039*** *(2016.01)*

(52) Cooperative Patent Classification (CPC):
**C08J 5/2293; H01M 8/1039;** C08J 2327/18

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **DECHEMA-Forschungsinstitut
60486 Frankfurt am Main (DE)**
- **Friedrich-Alexander-Universität
Erlangen-Nürnberg
91054 Erlangen (DE)**
- **UNIWELL Rohrsysteme GmbH & Co. KG
96106 Ebern (DE)**

(72) Inventors:
- **Sánchez Batalla, Beatriz
60486 Frankfurt am Main (DE)**
- **Fischer, Simon
96106 Ebern (DE)**
- **Fu, Zongwen
91058 Erlangen (DE)**
- **Weidlich, Claudia
61476 Kronberg im Taunus (DE)**
- **Bachmann, Julien
91077 Neunkirchen a. Brand (DE)**
- **Struckmann, Thorsten
20099 Hamburg (DE)**
- **Laube, Armin
20099 Hamburg (DE)**
- **Hofer, André
91487 vestenbergsgreuth (DE)**
- **Wachter, Sebastian
91054 Erlangen (DE)**
- **Körner, Carolin
90537 Feucht (DE)**
- **Wisser, Dorothea
91058 Erlangen (DE)**

(74) Representative: **Meyer-Dulheuer MD Legal
Patentanwälte PartG mbB
Hanauer Landstr. 287-289
60314 Frankfurt am Main (DE)**

# (54) A METHOD FOR CONDITIONING AND HYDROLYSIS OF AN EXTRUDED MEMBRANE

(57) A method (500) for conditioning or hydrolysis of an extruded membrane is disclosed.

The method (500) comprising ion exchange processes in divided electrochemical cells using a cation exchanger membrane. The method (500) includes extruding the perfluorosulfonyl fluoride membranes from perfluorosulfonyl fluoride granulate. The method (500) also includes using a pretreatment technique to increase the ionic conductivity of the extruded perfluorosulfonyl fluoride membranes before using the perfluorosulfonic acid membranes in electrolysis cells. The method (500) also includes applying a milder pretreatment technique by activating S-F bonds to execute nucleophilic exchange of the fluoride group in a reaction. The method (500) also includes hydrolyzing sulfonyl fluoride groups to sulfonic acid using triethylsilanol.

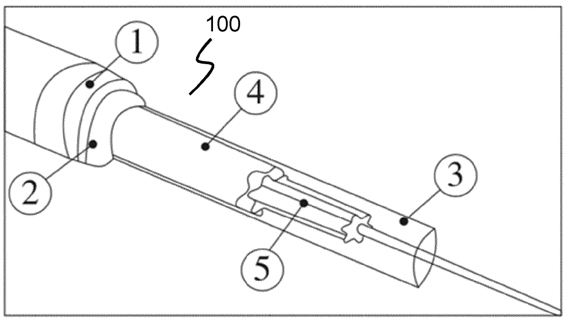


FIG. 1A

EP 4 442 741 A1

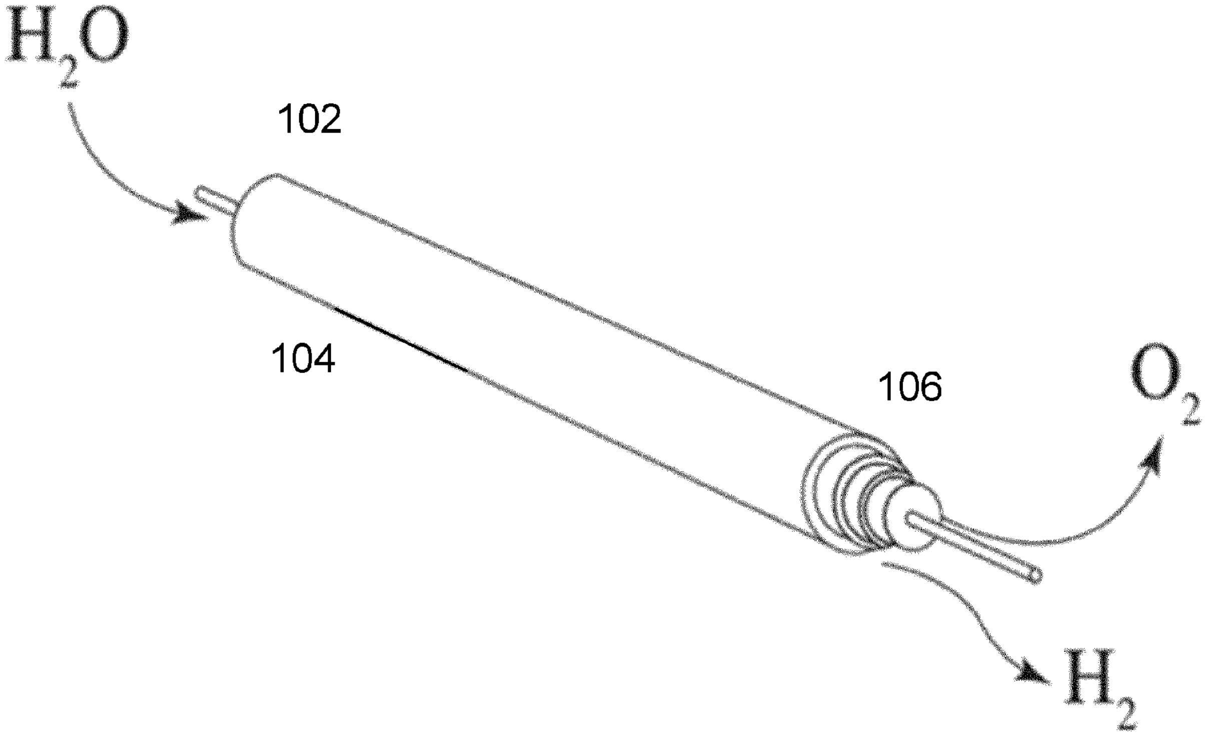


FIG. 1B

## Description

### TECHNICAL FIELD

The disclosed invention pertains generally to the field of electrochemical cells. More particularly, embodiments of the disclosed invention provide a method for conditioning and/or hydrolysis of an extruded membrane.

### Background Art

An electrochemical cell, which can be planar, tubular, or monolithic in design, is the basic building block for electrochemical devices. The various designs have a number of flaws, such as planar solid oxide fuel cells' (SOFCs') lengthy start-up times and tubular SOFCs' lower volumetric power densities. Direct current (DC) power is produced by electrochemical fuel cells, which convert the chemical bond energy potential of the fuel into electrical energy. At the moment, fuel cells are being investigated as an alternative to traditional electric power plants and battery storage systems.

Electrical energy storage is crucial in the context of the energy transition because the Renewable Energy Law may put the technical and financial stability of the electrical grid at risk as a result of the rising production of renewable and inherently unstable energy sources. For the absorption and release of various energy amounts over various time scales, several storage technologies must be integrated. High energy efficiency, low cost, and resource conservation must all be met by storage solutions. In addition to mechanical (compressed air, water columns) and thermal storage options, electrochemical devices (batteries, electrolysis/fuel cells) comprise a crucial component of such options.

Industrial water electrolysis is mostly carried out in two different types of cells. In an alkaline electrolyte, high currents can be produced using relatively cheap electrode materials, but usually at high overvoltage which results in low energy efficiency and is unfavorable for energy storage. Low overvoltage is feasible with PEM electrolysis, which conducts electrolysis under acidic conditions, however this is dependent on the employment of the valuable metals platinum and iridium as catalysts. Problematic from an economic and raw material standpoint, is the use in large amounts.

Alkaline water electrolyzers are more expanded in the commercial use, Proton Exchange Membranes Water Electrolyzers (PEMWE) are getting more attention due to a low gas crossover through the membrane, a high conversion efficiency, few corrosion issues and compact design. On the other side, there are still few challenges that must be addressed. One of them is the high cost of the conventional planar electrolyzers, due to the high cost of the bipolar plates, porous transport layers, platinum group metals (PGMs) catalysts and membrane. Moving from a planar to a tubular geometry of the cell could be a strategy to decrease the costs of production and assembly.

The anode and cathode, two porous electrodes, as well as a dense solid electrolyte and/or membrane that separate the electrodes, are commonly used in cells that make up solid-state electrochemical devices.

The electrolysis device described in WO 2008/048103A1 includes an outer walled container that is vertically divided into four serial chambers with electrodes placed in the first and last chambers. The chambers are separated from one another by semipermeable membranes, which are substantially permeable to cations and are preferably substantially impermeable to multivalent cations. The diffusion of gas, however, is not addressed in WO 2008/048103A1.

The document DE102016005144A1 describes a composite body which is a longitudinal device with a tubular cross section that is suitable as a building part for an electrochemical cell, and which is formed of a structural element, which includes an inner electrode or which is included by an outer electrode, the electrode either being a porous electrode or a gas-diffusion layer, and wherein the structural element in the contact area between the inner electrode and the including structural element exhibits shapes which form flow channels or wherein the structural element in the contact area between the outer electrode and the included structural element exhibits shapes which form flow channels. By the structural elements with shapes, the electric resistance along the composite body is significantly reduced and the pressure drop along the electrochemical cell which is usually a disadvantage during the use of the electrochemical cell is alleviated.

Due to the fact that hydrogen gas serves as both an energy carrier and a raw material for the chemical industry, the combination of water electrolysis for the production of hydrogen and oxygen with fuel cells for the re-emission of the energy contained in the fuel $H_2$ is particularly economically appealing in the present invention. Its distinctive added value comes from its dual functionality.

In this regard, lowering the cost of producing PEM electrolytic cells is a goal pursued by a number of organizations employing a variety of strategies, but always by steadily increasing cost and performance parameters using the technological parameters accessible in conventional planar stack systems. By utilizing production methods that are entirely novel to the field of electrolysis technology, the present invention aims to provide the possibility of an alternative method for membrane pretreatment which can be used in the presence of corrosion sensitive electrodes, e.g. catalyst coated electrodes in electrolyzer or fuel cells.

Thus, in light of the above-stated discussion, there is an urgent need for a technical solution that overcomes the above-stated limitations. The present disclosure focuses on a method for conditioning and/or hydrolysis of an extruded membrane.

## SUMMARY OF THE DISCLOSURE

The following is a summary description of illustrative embodiments of the invention. It is provided as a preface to assist those skilled in the art to more rapidly assimilate the detailed design discussion which ensues and is not intended in any way to limit the scope of the claims which are appended hereto in order to particularly point out the invention.

According to illustrative embodiments, the present disclosure focuses on a method for conditioning respectively pretreatment e.g. hydrolysis of an extruded membrane. The extrusion of the membrane enables a tubular structure of the electrolysis cell. After the extrusion process, the membrane has to be pretreated to ensure ionic conductivity of the membrane. Proton conductivity of the membrane is essential for the efficiency of water electrolysis, respectively the functioning of the electrolyzer.

According to an aspect of the present disclosure, a method for conditioning / pretreatment / hydrolysis of an extruded membrane is disclosed. The method for pretreating cation exchange membranes comprises converting water into hydrogen using a plurality of water electrolyzers (WE) and fuels cells as well as flow batteries. The method also includes sealing half cells of a tubular cell manufactured by a co-extrusion technique to attain a higher electrode volume per membrane area ratio. The method also includes extruding the perfluorosulfonyl fluoride membranes from perfluorosulfonyl fluoride granulate. The method also includes using a pretreatment technique to increase the ionic conductivity of the extruded perfluorosulfonyl fluoride membranes before using the membranes in electrolysis cells. The method also includes applying a milder pretreatment technique by activating S-F bonds to execute nucleophilic exchange of the fluoride group in a reaction. The method also includes hydrolyzing sulfonyl fluoride groups to sulfonic acid using triethylsilanol.

In one embodiment of the present invention, the perfluorosulfonyl fluoride membranes are commercially pretreated and a fluoride group is exchanged for a hydroxyl group using sodium hydroxide.

In one embodiment of the present invention, when the perfluorosulfonyl fluoride membranes are commercially pretreated, sodium sulfonate groups are protonated, by storing the perfluorosulfonyl fluoride membrane in 1 M sulfuric acid.

In one embodiment of the present invention, the commercially pretreated perfluorosulfonyl fluoride membrane comprises a plurality of parameters such as, but not limited to, proton diffusion, in-plane conductivity, ion exchange capacity, water uptake, and so forth.

In one embodiment of the present invention, the method comprises calculating the parameters such as water uptake, a swelling factor and the ion exchange capacity using a measurement technique.

In one embodiment of the present invention, the measurement technique comprises a Raman spectroscopy, a nuclear magnetic resonance (NMR) technique, and so forth.

In one embodiment of the present invention, the method further comprises passing of fluoride ion from a strong covalent bond to a leaving group, which is assisted by interaction with $H^+$ and/ or $R_3Si^+$ when a catalyst is used.

In one embodiment of the present invention, the catalyst comprises triethylsilanol in the presence of 1,8 diazabicyclo(5.4.0)undec-7-ene (DBU).

In an embodiment of the present invention, the reaction is a Sulfure (VI)-Fluoride Exchange (SuFEx) comprising exchange of the fluoride group to form a silanolate and releasing $F^-$ and deprotection of an ester to obtain sulfonic acid groups.

In an embodiment of the present invention, the method comprises optimizing a plurality of reactants.

In one embodiment of the present invention, the perfluorosulfonyl fluoride membrane is conditioned/treated for a predefined conditioning time with the optimized reactants' concentrations at room temperature.

In one embodiment of the present invention, the predefined conditioning time is increased in 24h intervals and after each interval, the perfluorosulfonic acid (PFSA) membrane is stored in water for 24 h and in 1 M $H_2SO_4$ for further 24 h.

In accordance with an embodiment of the present invention, the method comprises hydrolyzing the perfluorosulfonyl fluoride membrane with a concentration of reactants for conditioning of the perfluorosulfonyl fluoride membrane.

In an embodiment of the present invention, the method comprises hydrolyzing the perfluorosulfonyl fluoride membrane in $Et_3SiOH$ and storing it in 1 M $H_2SO_4$ solution until the measured conductivity is higher than 90 mS/cm.

In an embodiment of the present invention, the method comprises measuring the conductivity of the perfluorosulfonic acid membrane.

In one embodiment of the present invention, the co-extrusion technique comprises a simple extrusion, a multilayer extrusion, a fabric extrusion, and so forth.

In one embodiment of the present invention, the method comprises optimizing hydrolysis reaction parameters and evaluating the stability of the half cells.

These and other advantages will be apparent from the present application of the embodiments described herein.

The preceding is a simplified summary to provide an understanding of some embodiments of the present invention. This summary is neither an extensive nor exhaustive overview of the present invention and its various embodiments. The summary presents selected concepts of the embodiments of the present invention in a simplified form

as an introduction to the more detailed description presented below. As will be appreciated, other embodiments of the present invention are possible utilizing, alone or in combination, one or more of the features set forth above or described in detail below.

## BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

FIG. 1A illustrates a perspective view of tubular water electrolysis cell for producing hydrogen and oxygen, according to embodiments of the present invention;

FIG. 1B illustrates another perspective view of tubular water electrolysis cell, according to embodiments of the present invention disclosed herein;

FIG. 2 illustrates a top view of SEM image of a porous, anodized electrode of the tubular water electrolysis cell for producing hydrogen and oxygen, according to embodiments of the present invention disclosed herein;

FIG. 3A illustrates a cross-section view of SEM image of a porous, anodized electrode surface of the tubular water electrolysis cell for producing hydrogen and oxygen, according to embodiments of the present invention disclosed herein;

FIG. 3B - FIG. 3C illustrate images of the membrane before (left) and after (right) Raman measurement according to one or more embodiments of the present invention disclosed herein;

FIG. 3D illustrates a H-Cell to measure the proton diffusion of the extruded membranes, according to embodiments of the present invention disclosed herein;

Fig. 4 illustrates a perspective view of individual components of a PEME water electrolyzer, according to embodiments of the present invention disclosed herein; and

Fig. 5 illustrates a flowchart of a method for conditioning and/or hydrolysis of an extruded membrane, according to embodiments of the present invention disclosed herein.

The electrochemical cell system and a method for conditioning and/or hydrolysis of an extruded membrane is illustrated in the accompanying drawings, which like reference letters indicate corresponding parts in the various figures. It should be noted that the accompanying figures are intended to present illustrations of exemplary embodiments of the present disclosure. These figures are not intended to limit the scope of the present disclosure. It should also be noted that the accompanying figures are not necessarily drawn to scale.

## DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context

requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "including" and "including but not limited to" are used interchangeably.

Anodization is a method that is frequently utilized in industry, is used to carry out nano structuring.

SEM and scanning electron microscope can be used interchangeably for convenience throughout the invention.

PEM and Polymer electrolyte membrane can be used interchangeably for convenience throughout the invention.

Inductively Coupled Plasma Optical Emission Spectrometry and ICP-OES can be used interchangeably for convenience throughout the invention.

IEC and Ion-exchange chromatography can be used interchangeably for convenience throughout the invention.

Polytetrafluoroethylene and PTFE can be used interchangeably for convenience throughout the invention.

DMF and Dimethylformamide can be used interchangeably for convenience throughout the invention.

Following abbreviations can be used interchangeably for convenience throughout the invention:

XRD for X-ray Powder Diffraction

TEM for Transmission electron microscopy

EDX for Energy Dispersive X-Ray Analysis

AFM for Atomic force microscopy

BET for Brunauer-Emmett-Teller

GC-MS for Gas Chromatography-Mass Spectrometry

ICP-MS for Inductively coupled plasma mass spectrometry

AAS for Atomic absorption spectroscopy

TOC for Total organic carbon

IC for Ion chromatography

ADL for electrocatalytically active materials

PFSA for perfluorosulfonic acid

Fig. 1A illustrates a perspective view of tubular water electrolysis cell 100 for producing hydrogen and oxygen, according to embodiments of the present invention. The tubular water electrolysis cell 100 comprises an outer current collector 1, an outer electrode 2, an ion exchange membrane 3, an inner electrode 4, an inner current collector 5, and so forth.

According to embodiments of the present invention, a tubular cell 100 may also comprise the outer current collector 1 defining an exterior area of the tubular electrochemical cell 100. The outer current collector 1 may comprise an elongated hollow portion for including an outer electrode 2 with a plurality of physical, chemical and mechanical parameters, using additive manufacturing 102, the outer electrode 2 is molded, as depicted in Fig. 1B.

The additive manufacturing 102 may allow production of porous metal outer electrode 2 and inner electrode 4 with configurable microstructure, macroscopic structure as well as regularly built-up, and three-dimensional pore structures adapted to the expected voltage profile.

According to embodiments of the present invention, the plurality of physical, chemical and mechanical parameters comprises high porosity, large active reaction area, water and gas permeability for transport of reactants and reaction products, high electrical and thermal conductivity, good corrosion resistance and sufficient strength and dimensional stability under a certain flow pressure, and so forth.

Further, the outer current collector 1 comprises the ion exchange membrane 3 for exchanging ions from the outer electrode to the inner electrode 4 within an interior area. The ion exchange membrane 3 may be disposed in an inner cavity of the outer electrode 2 by a plurality of extrusion techniques directly onto the inner electrode 4.

Now simultaneously referring to Fig. 2, Fig. 3A - 3D describe various embodiments of the present invention.

Fig. 2 illustrates a top view 200 of SEM image of a porous, anodized electrode of the tubular water electrolysis cell 100 for producing hydrogen and oxygen, according to embodiments of the present invention. In particular, planar, high-purity metal samples can be anodized under exact temperature and electrical potential control, with correspondingly nearly flawless cylindrical pore shape and arrangement. Additionally, anodization may be used for the first time on structural titanium workpieces.

The diameter and length of the pores that form on the outer electrode 2 and the inner electrode 4 may be adjusted in one or more embodiments of the present invention. Additionally, using the atomic layer deposition (ALD) 104, the inner pore walls of the outer electrode 2 and the inner electrode 4 may be uniformly coated with thin (20 nm) to ultrathin (2 nm) layers of electrocatalytically active materials, also depicted in FIG. 3A. With the help of oxides, sulphides, and/or any other precious metals, electrocatalytically active materials, atomic layer deposition (ALD) has the extraordinary capacity to uniformly cover even deep pores.

In an exemplary scenario, tubular geometries are used in PEM fuel cells. In particular, in a tubular cell only half cells are sealed at the end and a higher electrode volume per membrane area ratio is obtained. Furthermore, half cells could be manufactured in a single step by a co-extrusion process, which permits continuous industrial cell production and reduces the number of components of the stack assembling process.

In accordance with an embodiment of the present invention, the co-extrusion process, the perfluorosulfonyl fluoride membranes are extruded from perfluorosulfonyl fluoride granulate. Moreover, the perfluorosulfonyl fluoride membranes are pre-treated before using them as ion exchanger membranes.

In accordance with an embodiment of the present invention, for commercial pretreatment, the fluoride group is exchanged for a hydroxyl group using sodium hydroxide. Afterwards, the sodium sulfonate groups are protonated by storing the membrane in 1 M sulfuric acid. The following below reaction occurs:

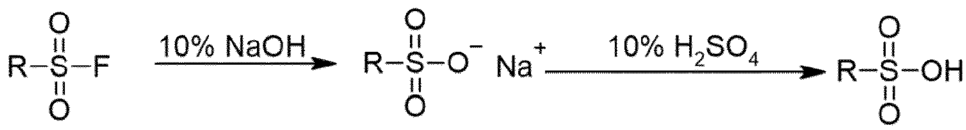


(1)

For the production of the tubular cell, the membrane is extruded onto the tubular electrode which is made in an embodiment of TiAlV coated with catalyst. These materials may corrode during the pretreatment with sodium hydroxide. A milder pretreatment process may be required to hydrolyze the stable S-F bonds in the membrane to withstand harsh reaction conditions. The stable S-F bonds may be activated in the presence of an appropriate catalyst, and the fluoride group can be nucleophilic exchanged in a reaction known as Sulfure (VI)-Fluoride Exchange (SuFEx). This kind of reaction - click chemistry - has been used in polymer chemistry to construct the core backbone of polymers and to functionalized monomers as side chains, which provides a post-polymerization modification of polymers.

In the presence of an adequate catalyst, fluoride ion passes from a strong covalent bond to a leaving group - assisted by interaction with $H^+$ and/ or $R_3Si^+$.

Thus, in the present invention, to achieve the hydrolysis with less corrosive chemicals, triethylsilanol in the presence of 1,8-diazabicyclo[5.4.0]undec-7-ene (DBU) is used as a catalyst. The reaction is a two-step reaction where the first step is the formation of an intermediate and the second step is the protonation of this intermediate obtaining the desired sulfonic acid groups. The feasibility of the hydrolysis of sulfonyl fluoride groups to sulfonic acid by a less aggressive process using triethylsilanol is shown in the below reaction:

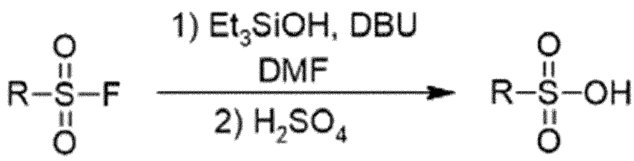


(2)

In particular, the pretreated membranes are characterized to assure good proton diffusion, in-plane conductivity, ion exchange capacity water uptake and stability of a co-extruded half-cell during the pretreatment processes.

In accordance with an embodiment of the present invention, the tubular cation exchange membranes are manufactured by extrusion of the perfluorosulfonyl fluoride/PTFE copolymer granulate material VM-Fumasep® FFT (FumaTech BWT) with particle size of 2 mm. For hydrolysis of the sulfonyl fluoride group N,N-dimethyl formamide (DMF, ≥99.9%, UV/IR Grade, Carl Roth GmbH), DBU (>99%, Sigma Aldrich), triethylsilanol (97%, Thermo Scientific) and sodium hydroxide (10% , Carl Roth GmbH) are used. For protonation, 1 M sulfuric acid (diluted from 75% sulfuric acid,

pure, Carl Roth GmbH) was used. Alternatively, Ultrapure water (PURELAB® Ultra, Elga LabWater) may be used.

In an embodiment of the present invention, the hydrolysis of the sulfonyl fluoride group was performed by a SuFEx reaction (reaction 2). In particular, the membrane is stored in a solution with $Et_3SiOH$, DBU and DMF at 70 °C while shaking at 200 rpm for 24 h. Afterwards, membranes are washed with water and stored in water at room temperature for 24 h. Moreover, the water is changed at least 3 times during storing. Further, the membranes are protonated in 1 M sulfuric acid at room temperature and 60 rpm for 24 h and stored in 1 M sulfuric acid overnight at room temperature. The membranes are then dried at 80 °C for 5 h and weighed to obtain dry mass. The water uptake is calculated using the following equation

$$W_{uptake}(\%) = [(W_{wet} - W_{dry})/W_{dry}] \times 100,$$

Where:

$W_{wet}$ - wet mass of the membrane

$W_{dry}$ - mass after drying

Further, the membranes are stored in 0.5 M NaCl solution for 24 h at room temperature, so that all protonated sulfonic acid group are exchanged with sodium cations. Afterwards the membranes are stored in 1 M sulfuric acid for 24 h and the $Na^+$ concentration at the end was measured by Inductively Coupled Plasma Optical Emission Spectrometry (ICP-OES). The IEC is calculated using the following equation:

$$IEC\ (mmol/g) = [Na] \cdot V_{H2SO4} / W_{dry} \cdot Mw_{\ Na},$$

Where,

[Na] is the concentration of sodium in mg/L measured with ICP-OES,
$V_{H2SO4}$ is the volume of 1 M sulfuric acid used to re-protonate the membrane in L,
$W_{dry}$ is the dried mass of the membrane in g and
$Mw_{Na}$ is the mol mass of sodium in mg/mmol.

In an embodiment of the present invention, the ion exchange membrane 3 may comprise a polymer electrolyte membrane (PEM).

In an embodiment of the present invention, Raman spectroscopy of the membranes is performed after storing them in 1 M sulfuric acid at room temperature overnight. Measurements are performed using a sample holder with a reservoir where water could be inserted, so the membrane was kept hydrated. A confocal microscope Raman spectrometer (InVia Reglex, Renishaw, Kingswood, UK) , laser beam (He-Ne, 633 nm, 0.85 mW) focused through an 50x objective lens (DM 2500, Leica, Mannheim, Germany) with 1 mm spot size and a high-resolution diffraction gratin density of 1800 grooves mm-1 is used. Single spectra is acquired with an integration time of 10 s and by accumulating 50 spectra. To determine thermal degradation of the membrane, before and after pictorial images are collected, as shown in FIG. 3B and FIG. 3C.

Referring to FIG. 3D and FIG. 3D, Proton diffusion is measured using an H-cell, where two compartments are separated by the membrane, which was cut and enrolled to a planar membrane and clamped between two PTFE gaskets. The used surface of the membrane is 0.196 $cm^2$, specified by the sealing area of the gaskets. One of the compartments is filled with 0.1 M HCl and the other one with 0.5 M NaCl. Due to the different concentrations of $H^+$, there is a diffusion from the compartment with high concentration to the compartment with low concentration. The increasing proton concentration in the NaCl compartment was followed by pH measurements over 30 min and proton diffusion of the membrane was calculated with equation

$$J_H{}^d = n_{\ B} / A \cdot t.$$

Where,

$J_H{}^d$ is the proton diffusion in $\mu$mol/cm$^2$min,

$n_B$ is the increase of protons concentration in the NaCl compartment in μmol,

A is the area of the membrane in $cm^2$ and

t is the time in s.

Before measuring in-plane conductivity, the membrane was protonated in sulfuric acid at room temperature overnight and washed several times with water, to remove residues of sulfuric acid. A four-electrode setup MK3 cell (FUMATECH BWT) was used, the membrane was placed on the four platinum electrodes of the probe head and the cap of the probe head was placed on the membrane so that the insulating Teflon side of the cap is facing the sample. The cap was fixed with 2 screws by hand. To avoid dehydration of the membrane, the cell was immersed into demineralized water at room temperature. A single frequency impedance measurement was performed at 1000 Hz, at open circuit voltage and with an amplitude of 10 mV with a Gamry potentiostat (Gamry reference 3000 potentiostat / galvanostat / ZRA). The proton conductivity is calculated using equation, $\sigma = L/W \cdot T \cdot R$, where $\sigma$ is the in plane conductivity in S/cm, L is the distance between electrodes in cm, B is the width of the membrane in cm, D is the thickness of the membrane in cm and R is the resistance measured in Ohm.

In a preferred embodiment of the present invention, a stability test of the co-extruded half cells was performed using the optimized hydrolysis reaction parameters. The concentration of the reactants and the duration of reaction varied until an optimum in the proton conductivity is achieved. First, the reactants are optimized, and the used concentrations are listed in table 1:

Table 1: Concentration of the different reactants in relation to various parameters

| Membrane | Membrane | $Et_3SiOH$ | DBU | Thickness | Conductivity |
|---|---|---|---|---|---|
| Name | Equivalent | Equivalent | Equivalent | μm | mS/cm |
| 1a | 1 | 0,5 | 0,25 | 50 | 13 |
| 1b | 1 | 1 | 0,25 | 50 | 38 |
| 1c | 1 | 0,5 | 0,5 | 50 | 60 |
| 1d | 1 | 1 | 1 | 50 | 94 |
| F10100 | | 100 | | 90 | |

As solvent, 5 mL DMF is used and the reaction is carried out at 70 °C and 200 rpm for 24 h. The measured conductivities are compared to Fumasep® F10100 membrane (FumaTech BWT), a commercial PFSA planar membrane. The conductivity achieved with membrane 1d was comparable to the conductivity of the commercial one. Thus, these reactant concentrations (1 eq. membrane, 1 eq. $Et_3SiOH$ and 1 eq. DBU) are used.

The reproducibility of the results is investigated as illustrated in table 2. The two extruded membranes are conditioned with the optimal reactant concentrations (1 equivalent membrane, 1 equivalent Et3SiOH and 1 equivalent DBU) and the proton conductivity is measured and compared to sample 1d. The conductivity of three membranes hydrolyzed with the same concentration of reactants. Since the standard deviation was 3%, it can be concluded that the hydrolysis reaction is sufficiently reproduceable.

Table 2: Investigation of the reproducibility of the pretreatment of the membrane.

| Membrane | Thickness | Conductivity |
|---|---|---|
| Name | μm | mS/cm |
| 1d | 50 | 94 |
| 2a | 50 | 96 |
| 2b | 50 | 90 |

The hydrolysis reaction was performed by pretreating the membrane with the optimized reactant concentrations at room temperature. The conditioning time was increased in 24 h intervals. After each interval, the membrane is stored in water for 24 h and in 1 M $H_2SO_4$ for further 24 h. Afterwards, the conductivity is measured, and the membrane is again stored in the same solution for the next 24 h. Reaction time was increased until a conductivity >90 mS/cm was

achieved. Table 3 shows reaction times and conductivity of the membrane respectively.

Table 3: Reaction time and conductivity of a membrane while optimization of reaction time parameter.

| Membrane Name | Reaction time (h) | Thickness ($\mu$m) | Conductivity (mS/cm) |
|---|---|---|---|
| 3a | 24 | 50 | 18 |
| 3b | 48 | 50 | 57 |
| 3c | 72 | 50 | 78 |
| 3d | 96 | 50 | 87 |

In one embodiment of the present invention, the stability test of the co-extruded half cells comprises a physico-chemical characterization. All membranes are characterized after the hydrolysis reaction is completed, to ensure that the physicochemical characteristics of membranes are conditioned. The water uptake swelling factor and ion exchange capacity are calculated and Raman and NMR measurement is performed.

The ion exchange membrane 3 may comprise a tubular membrane being welded or extruded to the inner electrode 4, as seen in Fig. 1 and Fig. 4.

According to embodiments of the present invention, the plurality of extrusion techniques comprises a simple extrusion, a multi-layer extrusion, a fabric extrusion, and so forth.

The inner electrode 4 may comprise a first end and a second end being molded by the additive manufacturing 102. In an embodiment of the present invention, the inner electrode 4 comprises Ti-Fleece GDE.

The outer current collector 1 and the inner current collector 5 may further utilize the plurality of extrusion techniques for extrusion-based production of tubular water electrolysis cell 100.

The outer electrode 2 and the inner electrode 4 may comprise porous outer electrode 2 and inner electrode 4 with an effective active surface area for increasing electrochemical reaction depending on the open porosity as well as pore size.

In a preferred embodiment of the present invention, the outer electrode 2 and the inner electrode 4 may comprise varying geometrical parameters of pores and coating(s).

In one embodiment of the present invention, a diameter and length of the pores forming on the outer electrode 2 and the inner electrode 4 may be adjustable. Further, inner pore walls of the outer electrode 2 and the inner electrode 4 may be homogeneously coated by thin (<20 nm) to ultrathin (<2 nm) layers of electrocatalytically active materials by means of atomic layer deposition (ALD) 104.

The tubular electrochemical cell 100 further comprises an inner current collector 5 embedded in a surrounding wall of the inner electrode 4 which extends longitudinally. Additionally, the inner current collector 5 may extend across the first end and second end of the inner current electrode 4.

Additionally, as additional components of such cells, the inner current collector 5 and outer current conductor 1 may also be generated by extrusion 106, which has the potential to greatly simplify the production of the tubular water electrolysis cell 100.

Fig. 4 illustrates a perspective view of individual components of a PEM water electrolyzer, according to embodiments of the present invention. One half-cell serves as the flow-by electrode and is formed by the tubular membrane electrode assemblies made of titanium hollow fiber and titanium nonwoven, respectively. Another half-cell is made of graphite felt. In addition to a straightforward setup with a flow channel, titanium flow fields with multiple start helices are also accessible. Both half cells are divided by a tubular ion exchanger membrane.

Fig. 5 illustrates a flowchart of a method 500 for method for conditioning and/or hydrolysis of an extruded membrane, according to embodiments of the present invention.

At 502, converting water into hydrogen using a plurality of water electrolyzers (WE).

At 504, sealing half cells of a tubular cell 100 manufactured by a co-extrusion technique to attain a higher electrode volume per membrane area ratio.

At 506, extruding the perfluorosulfonyl fluoride membranes from perfluorosulfonyl fluoride granulate. In an embodiment of the present invention, the perfluorosulfonyl fluoride membranes are commercially pretreated and a fluoride group is exchanged for a hydroxyl group using sodium hydroxide. When the perfluorosulfonyl fluoride membranes are commercially pretreated, sodium sulfonate groups are protonated by 1 M sulfuric acid.

At 508, using a pretreatment technique to increase the ionic conductivity of the extruded perfluorosulfonyl fluoride membranes before using the perfluorosulfonic acid membranes as cation exchange membranes.

At 510, applying a milder pretreatment technique by activating S-F bonds to execute nucleophilic exchange of the fluoride group. According to an embodiment of the present invention, the reaction may be a Sulfure (VI)-Fluoride Exchange (SuFEx) comprising exchange of the fluoride group. Further, the storing in sulfuric acid may comprise deprotection of an ester to obtain sulfonic acid groups.

At 512, sulfonyl fluoride groups are hydrolyzed to sulfonic acid groups using triethylsilanol.

In one embodiment of the present invention, the commercially pretreated perfluorosulfonic acid (PFSA) perfluorosulfonyl fluoride membrane comprises a plurality of parameters such as, but not limited to, proton diffusion, in-plane conductivity, ion exchange capacity, water uptake, and so forth.

In one embodiment of the present invention, the method 500 further comprises calculating the parameters such as water uptake, a swelling factor and the ion exchange capacity using a measurement technique. According to embodiments of the present invention, the measurement technique may comprise a Raman spectroscopy, a nuclear magnetic resonance (NMR) technique, and so forth.

In one embodiment of the present invention, the method further comprises passing of fluoride ion from a strong covalent bond to a leaving group, which is assisted by interaction with $H^+$ and/ or $R_3Si^+$ when a catalyst is used. The catalyst comprises triethylsilanol in the presence of 1,8 diazabicyclo[5.4.0]undec-7-ene (DBU).

According to one implementation of the invention, the method 500 may comprise optimizing a plurality of reactants. The perfluorosulfonyl fluoride membrane is conditioned for a predefined conditioning time with the optimized reactants' concentrations at room temperature. In an embodiment of the present invention, the predefined conditioning time is increased in 24h intervals and after each interval, the pretreated perfluorosulfonyl fluoride membrane is stored in water for 24 h and in 1 M $H_2SO4$ for further 24 h.

While the invention has been described in connection with what is presently considered to be the most practical and various embodiments, it will be understood that the invention is not to be limited to the disclosed embodiments, but on the contrary, is intended to cover various modifications and equivalent arrangements included within the scope of the appended claims.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical software, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the software or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method (500) for conditioning and/or hydrolysis of an extruded membrane, the method comprising: ion exchange processes in divided electrochemical cells using a cation exchanger membrane and

   pretreatment of perfluorosulfonyl fluoride membranes which have been extruded from perfluorosulfonyl fluoride granulate;
   using a pretreatment technique to increase the ionic conductivity of the extruded perfluorosulfonyl fluoride membranes before using the perfluorosulfonic acid membranes as cation exchange membranes;
   applying the pretreatment technique by activating S-F bonds to execute nucleophilic exchange of the fluoride group in a reaction; and
   hydrolyzing sulfonyl fluoride groups to sulfonic acid using triethylsilanol.

2. The method (500) of claim 1, wherein the pretreated perfluorosulfonyl fluoride membrane comprises a plurality of

parameters such as, but not limited to, proton diffusion, in-plane conductivity, ion exchange capacity, water uptake, or any foregoing combination.

**3.** The method (500) of claim 2, wherein the method (500) comprises calculating the parameters such as water uptake, a swelling factor and the ion exchange capacity using a measurement technique.

**4.** The method (500) of claim 3, wherein the measurement technique comprises a Raman spectroscopy, a nuclear magnetic resonance (NMR) technique or any foregoing combination thereof.

**5.** The method (500) of claim 1, wherein the method (500) further comprises passing of fluoride ion from a strong covalent bond to a leaving group, which is assisted by interaction with $H^+$ and/ or $R_3Si^+$ when a catalyst is used.

**6.** The method (500) of claim 5, wherein the catalyst comprises triethylsilanol in the presence of 1,8 diazabicyclo[5.4.0] undec-7-ene (DBU).

**7.** The method (500) of claim 1, wherein the reaction is a Sulfure (VI)-Fluoride Exchange (SuFEx) comprising: exchange of the fluoride group to form an intermediate and protonation of this intermediate to obtain sulfonic acid groups.

**8.** The method (500) of claim 1, wherein the method (500) comprises optimizing a plurality of reactants.

**9.** The method (500) of claim 8, wherein the perfluorosulfonyl fluoride membrane is pre-treated for a predefined conditioning time with the optimized reactants' concentrations at a room temperature.

**10.** The method (500) of claim 9, wherein the predefined pretreatment time is increased in 24h intervals and after each interval, the pretreated perfluorosulfonyl fluoride membrane is stored in water for 24 h and in 1 M $H_2$SO4 for further 24 h.

**11.** The method (500) of claim 1, wherein the method (500) comprises hydrolyzing the perfluorosulfonyl fluoride membrane with a concentration of reactants for pretreatment of the perfluorosulfonyl fluoride membrane to achieve high conductivity.

**12.** The method (500) of claim 1, wherein the method (500) comprises measuring the conductivity of the perfluorosulfonic acid (PFSA) membrane.

**13.** The method (500) of claim 1, wherein the method (500) comprises storing the perfluorosulfonic acid (PFSA) membrane in water and in 1 M $H_2SO_4$ solution to increase reaction time until a conductivity >90 mS/cm is achieved.

**14.** The method (500) of claim 1, wherein the co-extrusion technique comprises a simple extrusion, a multi-layer extrusion, a fabric extrusion, or any foregoing combination thereof.

**15.** The method (500) of claim 1, wherein the method (500) comprises optimizing hydrolysis reaction parameters by a stability test of the co-extruded half cells.

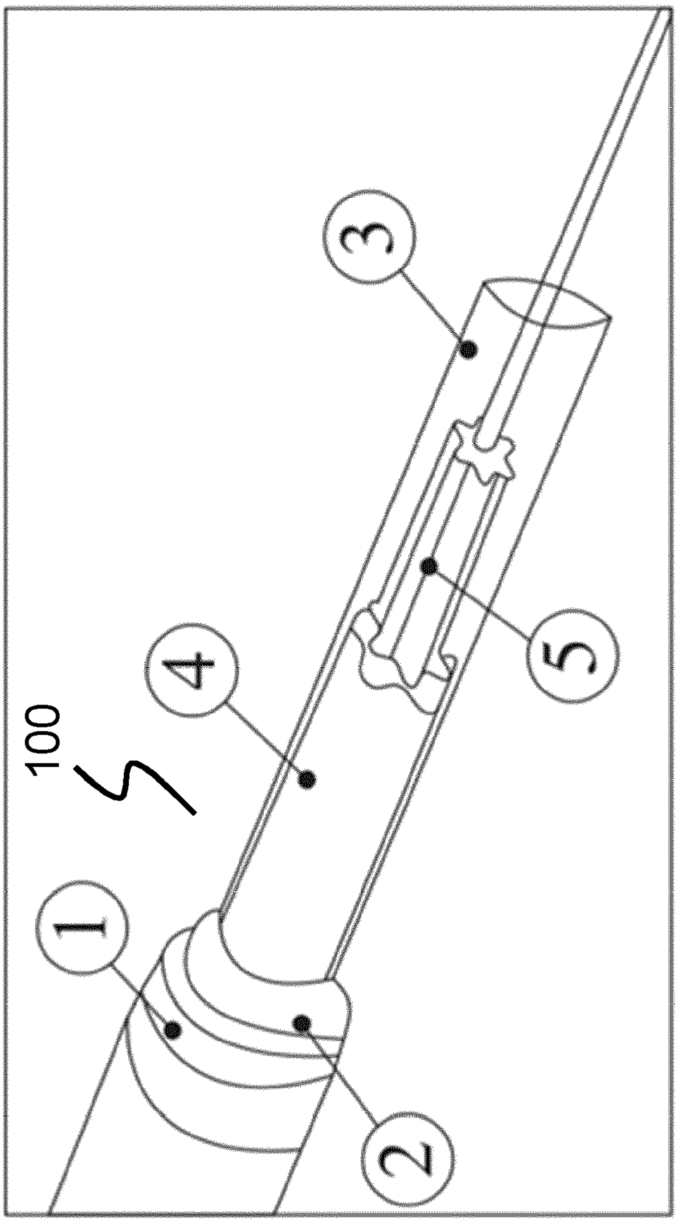


FIG. 1A

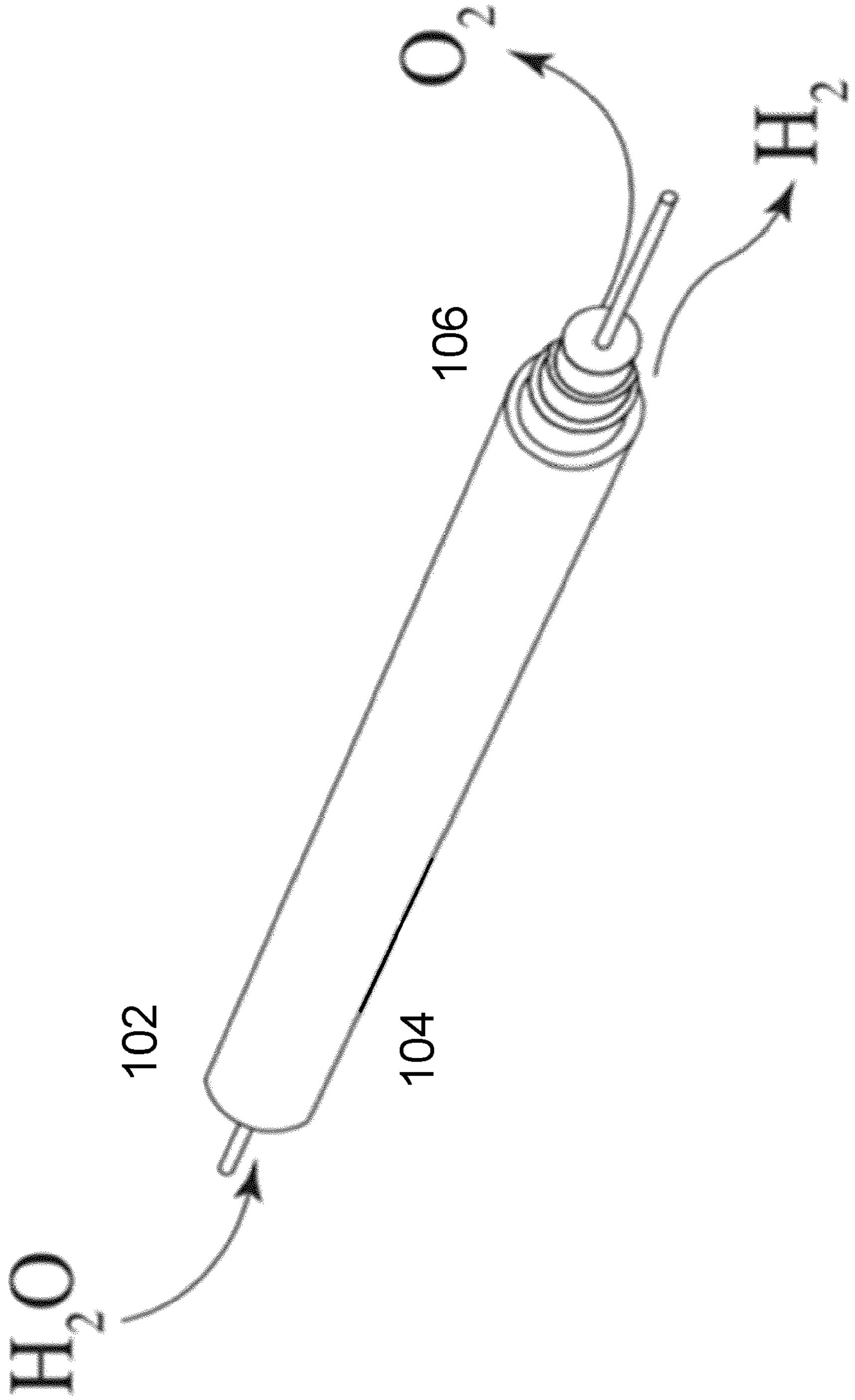


FIG. 1B

200

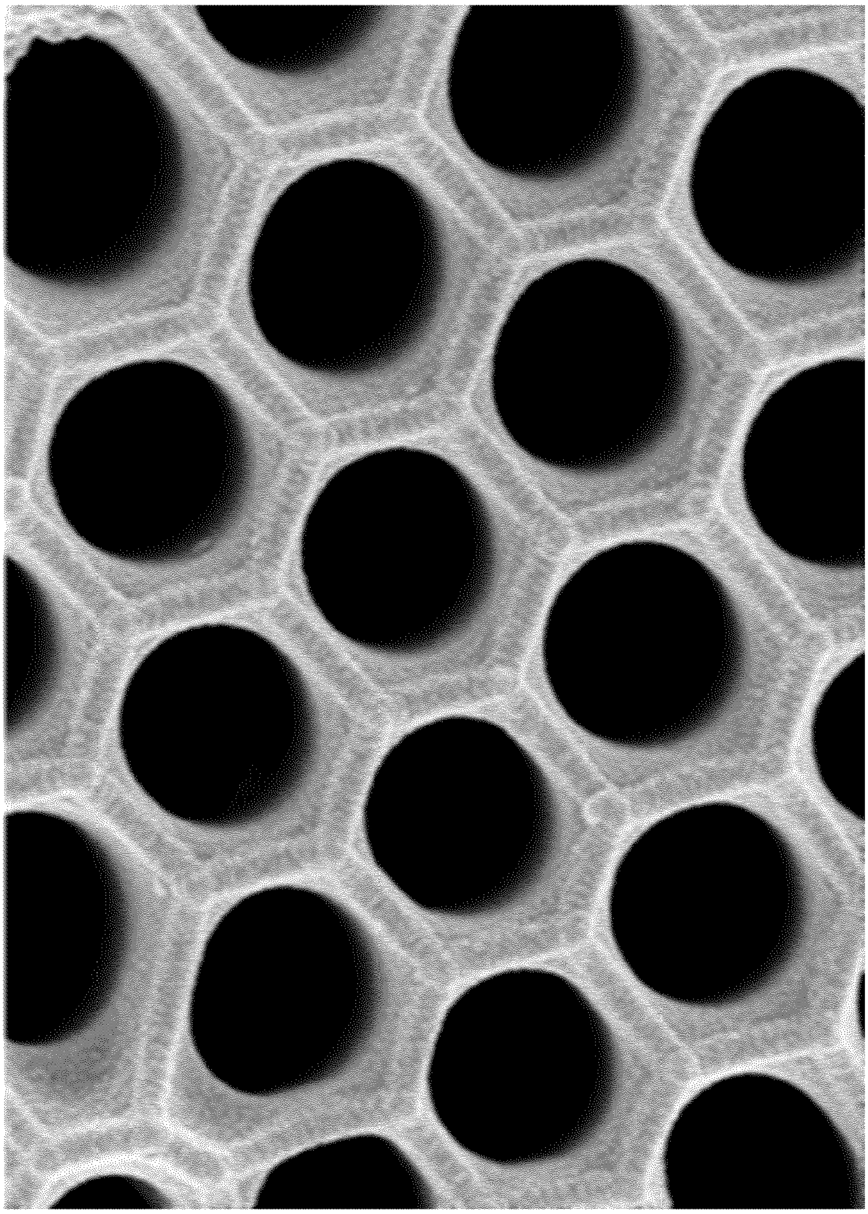

FIG. 2

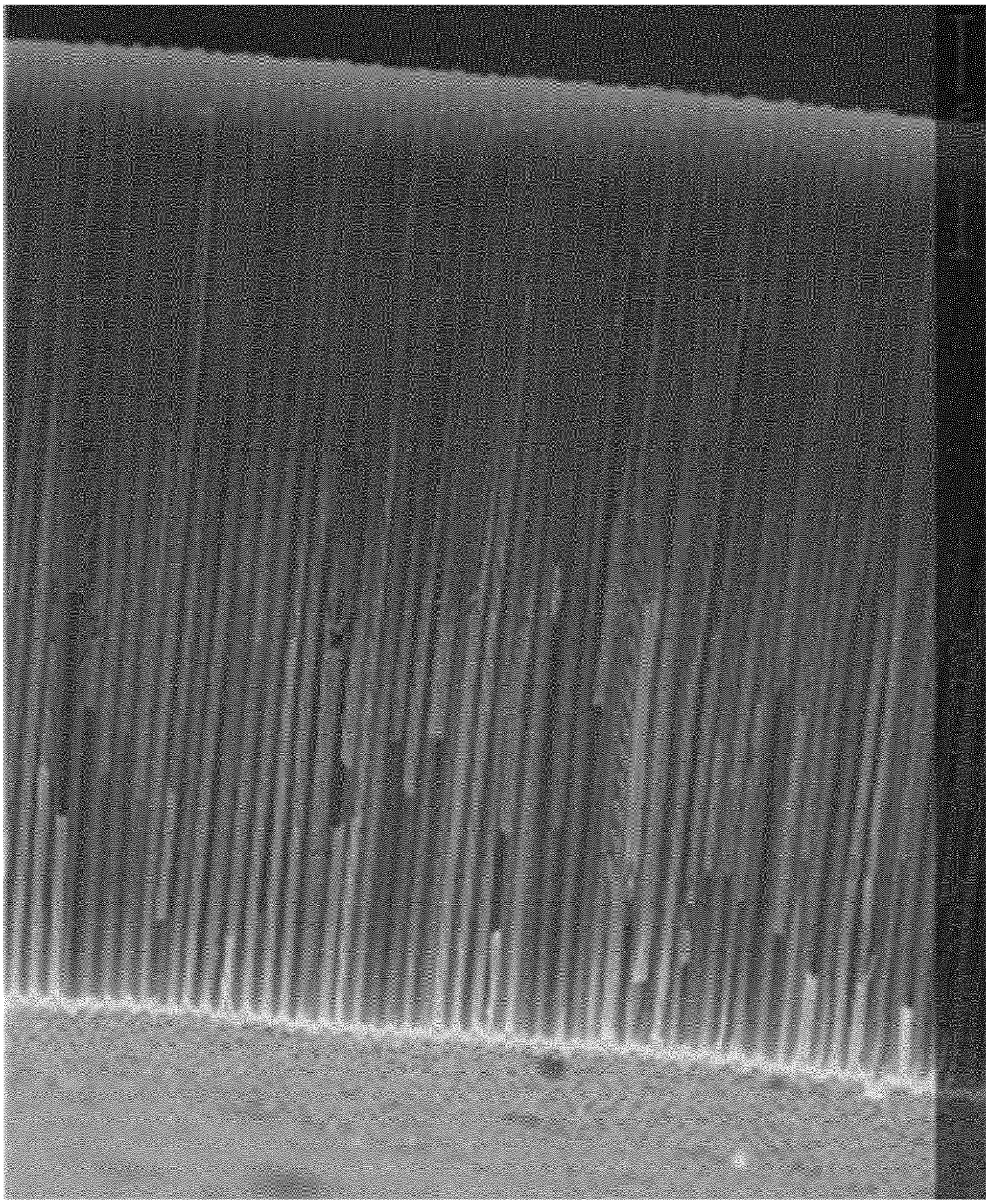

FIG. 3A

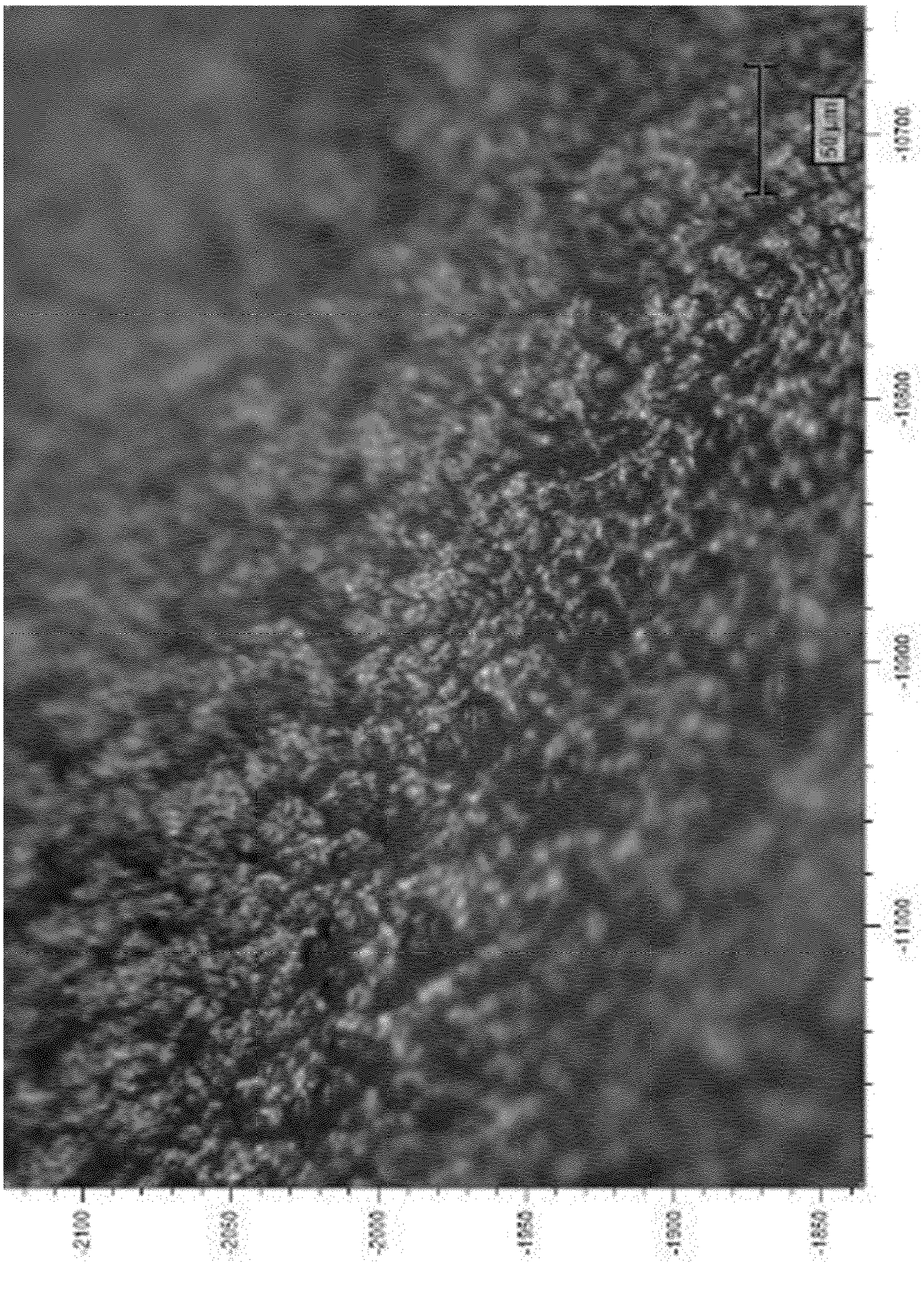


FIG. 3B

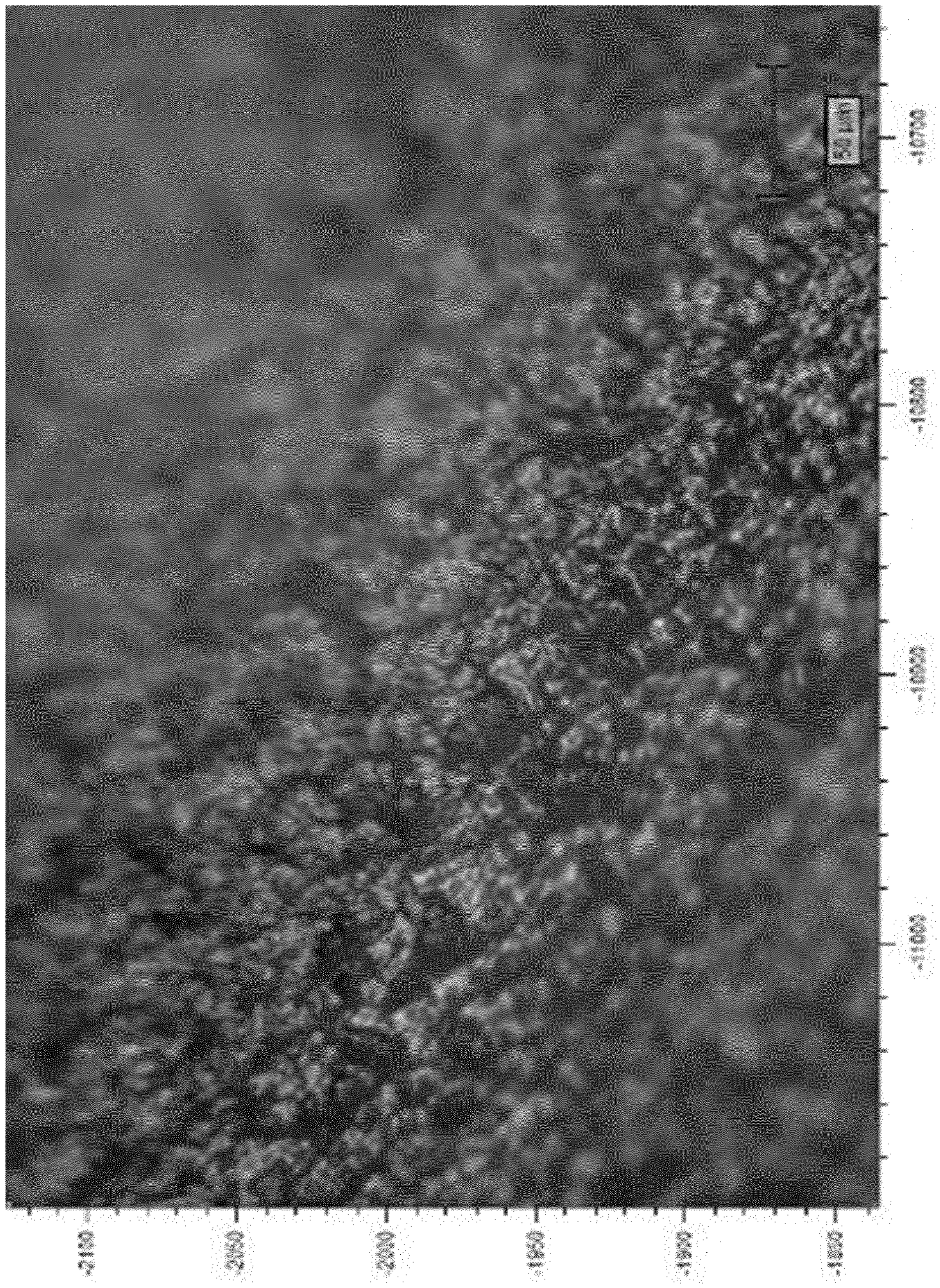


FIG. 3C

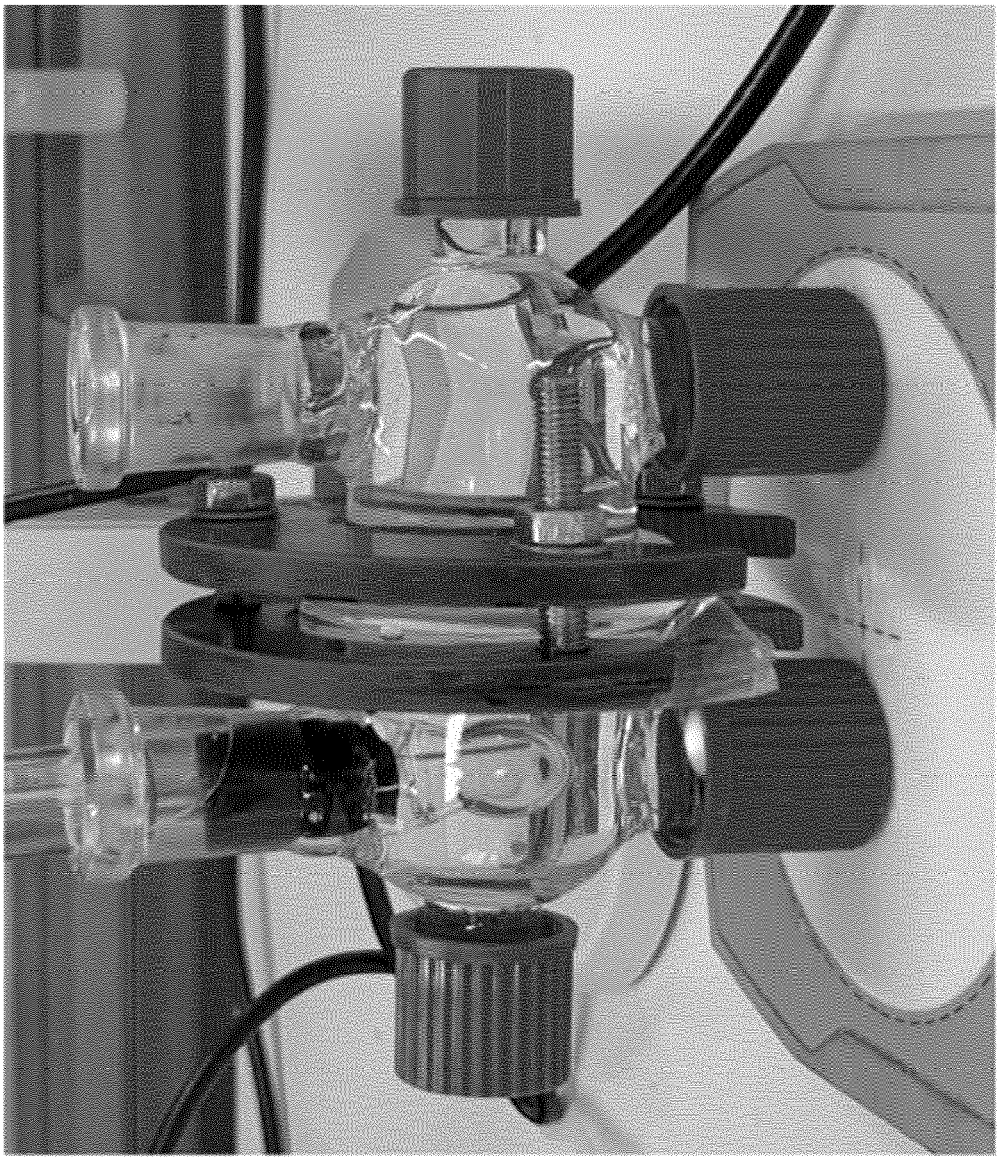

FIG. 3D

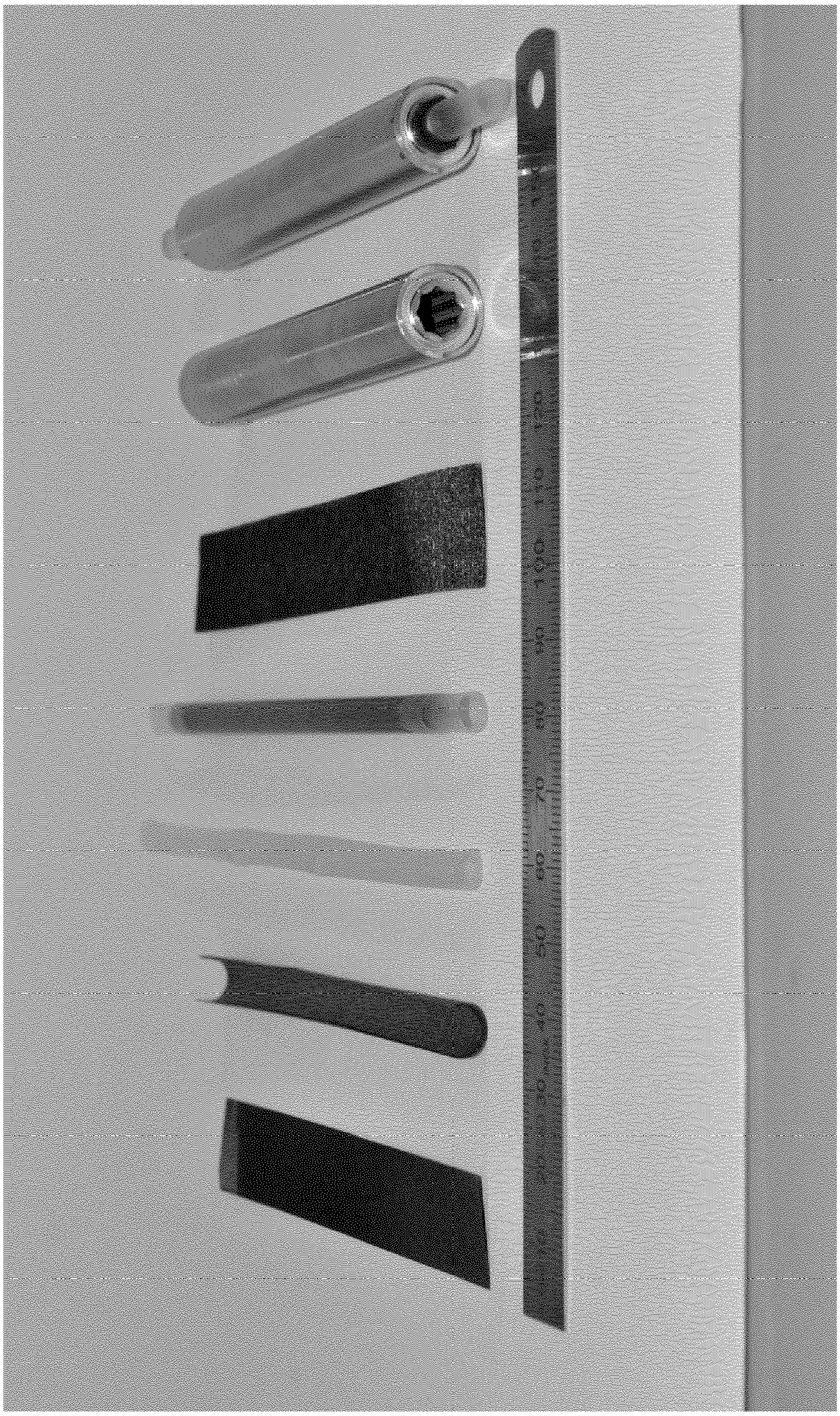

FIG. 4

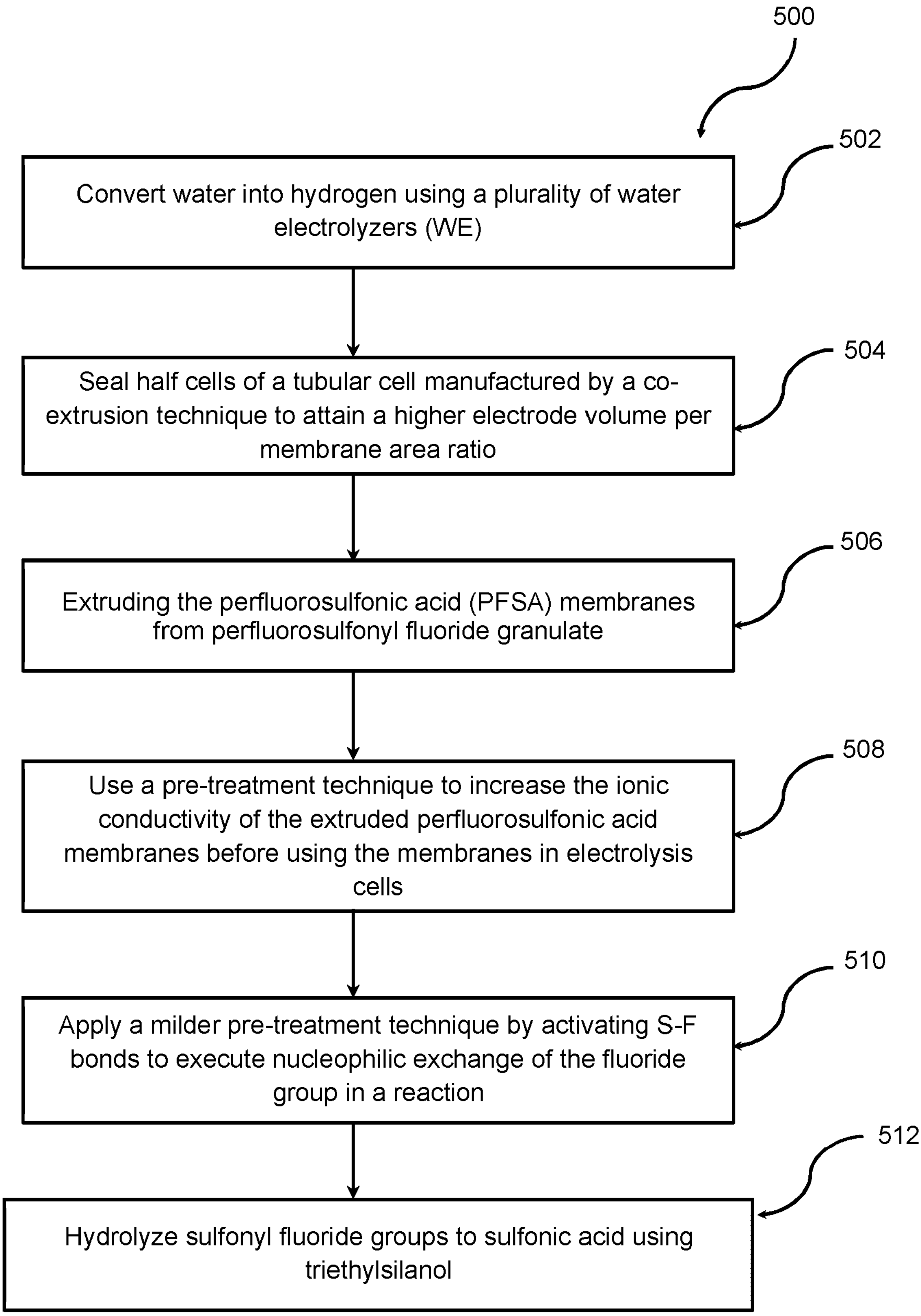
500
502
Convert water into hydrogen using a plurality of water electrolyzers (WE)
504
Seal half cells of a tubular cell manufactured by a co-extrusion technique to attain a higher electrode volume per membrane area ratio
506
Extruding the perfluorosulfonic acid (PFSA) membranes from perfluorosulfonyl fluoride granulate
508
Use a pre-treatment technique to increase the ionic conductivity of the extruded perfluorosulfonic acid membranes before using the membranes in electrolysis cells
510
Apply a milder pre-treatment technique by activating S-F bonds to execute nucleophilic exchange of the fluoride group in a reaction
512
Hydrolyze sulfonyl fluoride groups to sulfonic acid using triethylsilanol

FIG. 5

Europäisches Patentamt
European Patent Office
Office européen des brevets

# EUROPEAN SEARCH REPORT

Application Number
EP 23 16 6322

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 677 571 A1 (AGC INC [JP]) 8 July 2020 (2020-07-08) * paragraphs [0007], [0090], [0121], [0182], [0186]; claims 1,2,10,16 * ----- | 1-15 | INV. C08J5/22 H01M8/1039 |
| A | US 2013/029249 A1 (HAMROCK STEVEN JOSEPH [US] ET AL) 31 January 2013 (2013-01-31) * paragraphs [0031], [0082], [0117] - [0121]; claims 1, 14, 27 * ----- | 1-15 | |
| A | LOU TERRY SHING-BONG ET AL: "Sulfonyl fluorides as targets and substrates in the development of new synthetic methods", NATURE REVIEWS CHEMISTRY, NATURE PUBLISHING GROUP UK, LONDON, vol. 6, no. 2, 19 January 2022 (2022-01-19), pages 146-162, XP037689284, DOI: 10.1038/S41570-021-00352-8 [retrieved on 2022-01-19] * the whole document * ----- | 1,5-7 | |

TECHNICAL FIELDS SEARCHED (IPC)

C08J
H01M

The present search report has been drawn up for all claims

1

| Place of search | Date of completion of the search | Examiner |
|---|---|---|
| Munich | 6 September 2023 | Fischer, Viktor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 16 6322

This annex lists the patent family members relating to the patent documents cited in the above-mentioned European search report. The members are as contained in the European Patent Office EDP file on
The European Patent Office is in no way liable for these particulars which are merely given for the purpose of information.

06-09-2023

| Patent document cited in search report | Publication date | Patent family member(s) | Publication date |
|---|---|---|---|
| EP 3677571 A1 | 08-07-2020 | CN 111051368 A | 21-04-2020 |
| | | CN 111065624 A | 24-04-2020 |
| | | EP 3677570 A1 | 08-07-2020 |
| | | EP 3677571 A1 | 08-07-2020 |
| | | JP 7056664 B2 | 19-04-2022 |
| | | JP 7173019 B2 | 16-11-2022 |
| | | JP 7238957 B2 | 14-03-2023 |
| | | JP 2022044614 A | 17-03-2022 |
| | | JP 2022169648 A | 09-11-2022 |
| | | JP WO2019045063 A1 | 01-10-2020 |
| | | JP WO2019045064 A1 | 29-10-2020 |
| | | KR 20200047516 A | 07-05-2020 |
| | | US 2020190025 A1 | 18-06-2020 |
| | | US 2020190233 A1 | 18-06-2020 |
| | | US 2022041765 A1 | 10-02-2022 |
| | | WO 2019045063 A1 | 07-03-2019 |
| | | WO 2019045064 A1 | 07-03-2019 |
| US 2013029249 A1 | 31-01-2013 | CN 102834374 A | 19-12-2012 |
| | | CN 104016891 A | 03-09-2014 |
| | | EP 2558442 A2 | 20-02-2013 |
| | | JP 5856145 B2 | 09-02-2016 |
| | | JP 2013525519 A | 20-06-2013 |
| | | US 2013029249 A1 | 31-01-2013 |
| | | WO 2011129967 A2 | 20-10-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008048103 A1
- DE 102016005144 A1